# EUROPÄISCHE PATENTSCHRIFT

(11) **EP 3 916 372 B1**
(45) Veröffentlichungstag und Bekanntmachung des Hinweises auf die Patenterteilung: **20.03.2024**
(21) Anmeldenummer: 20211831.1
(22) Anmeldetag: 04.12.2020
(51) Int. Cl.: G01M 17/02, B60C 11/24, G01B 11/22, G01S 13/88, B29D 30/00, B29D 30/06, B60C 11/00, B60C 11/02, G01S 7/41, G01S 13/86, G01S 17/88, G01B 11/06

(54) **VERMESSUNGSVORRICHTUNG**
MEASURING DEVICE
DISPOSITIF DE MESURE

(30) Priorität: 28.05.2020 DE 102020206680
(43) Veröffentlichungstag der Anmeldung: 01.12.2021
(73) Patentinhaber: Continental Reifen Deutschland GmbH, 30175 Hannover (DE)
(72) Erfinder: Ranjbaran, Alireza, 30419 Hannover (DE); Lacayo-Pineda, Jorge, 30419 Hannover (DE)
(74) Vertreter: Continental Corporation

(56) Entgegenhaltungen:
- EP-A1- 3 019 847
- EP-B1- 3 019 847
- DE-A1- 10 319 099
- DE-A1-102008 057 542
- DE-A1-102009 026 845
- DE-A1-102013 016 115
- DE-A1-102017 218 902
- DE-A1-102018 218 610

## Beschreibung

Die Erfindung betrifft eine Vorrichtung und ein System.

Die Erfindung geht aus von einer Vorrichtung zum Vermessen eines Reifens und von Komponenten des Reifens. Bei den Komponenten des Reifens kann es sich beispielsweise um Festigkeitsträger des Reifens handeln. Beispielhaft für einen Festigkeitsträger des Reifens sind eine Karkasse oder ein Reifengürtel. Bei der Komponente kann es sich insbesondere um eine Kautschukschicht des Reifens handeln.

Die Vorrichtung weist eine erste Messkomponente und eine zweite Messkomponente auf. Die erste Messkomponente und die zweite Messkomponente sind jeweils zur Durchführung eines Laufzeitverfahrens vorgesehen. Die Vorrichtung weist eine Auswertekomponente auf, wobei die Auswertekomponente zur Auswertung von mittels der ersten Messkomponente und mittels der zweiten Messkomponente gemessener Messgrößen vorgesehen ist Bei der Auswertekomponente handelt es sich beispielsweise um eine elektronische Auswertekomponente oder um eine Computereinheit.

Die erste Messkomponente weist ein erstes Emissionselement und erstes ein Detektionselement auf.

Die zweite Messkomponente weist ein zweites Emissionselement und ein zweites Detektionselement auf.

Das erste Emissionselement ist zur Aussendung erster elektromagnetischer Wellen in eine erste Emissionsrichtung vorgesehen und das erste Detektionselement ist zum Erfassen der ersten elektromagnetischen Wellen nach einer Reflektion der ersten elektromagnetischen Wellen vorgesehen.

Das zweite Emissionselement ist zur Aussendung zweiter elektromagnetischer Wellen in eine zweite Emissionsrichtung vorgesehen und das zweite Detektionselement ist zum Erfassen der zweiten elektromagnetischen Wellen nach einer Reflektion der zweiten elektromagnetischen Wellen vorgesehen, wobei die erste Emissionsrichtung und die zweite Emissionsrichtung zueinander parallel sind.

Die ersten elektromagnetischen Wellen liegen in einem ersten Wellenlängenbereich und die zweiten elektromagnetischen Wellen liegen in einem zweiten Wellenlängenbereich.

Die ersten elektromagnetischen Wellen können ausgesendet werden. Nach der Aussendung treffen die ersten elektromagnetischen Wellen auf einen ersten Materialübergang und werden an dem zweiten Materialübergang reflektiert. Die reflektierten ersten elektromagnetischen Wellen breiten sich in Richtung des ersten Detektionselementes aus und werden von diesem erfasst. Anhand der bekannten Geschwindigkeit, mit der sich die ersten elektromagnetischen Wellen ausbreiten, kann anhand einer ersten Zeitdauer, die die ersten Wellen von dem Zeitpunkt des Aussendens durch das erste Emissionselement bis zum Empfangen durch das erste Detektionselement benötigen, die von den ersten elektromagnetischen Wellen zurückgelegte Strecke errechnet werden. Anhand dieser zurückgelegten Strecke kann der Abstand des ersten Emissionselementes und des ersten Detektionselementes zu dem ersten Materialübergang errechnet werden. Dieser Abstand wird als erster Abstand bezeichnet. Die erste Zeitdauer wird als erste Laufzeit bezeichnet. Dabei behalten das erste Emissionselement, das erste Detektionselement und der erste Materialübergang ihre relative räumliche Position zueinander während der Messung der ersten Laufzeit der Wellen bei.

Die Berechnung eines räumlichen Abstandes anhand einer Laufzeit wird als Laufzeitverfahren bezeichnet.

Die zweiten elektromagnetischen Wellen können ebenfalls ausgesendet werden. Nach der Aussendung treffen die zweiten elektromagnetischen Wellen auf einen zweiten Materialübergang und werden an dem zweiten Materialübergang reflektiert. Die reflektierten zweiten elektromagnetischen Wellen breiten sich in Richtung des zweiten Detektionselementes aus und werden von diesem erfasst. Anhand der bekannten Geschwindigkeit, mit der sich die zweiten elektromagnetischen Wellen ausbreiten, kann anhand einer zweiten Zeitdauer, die die zweiten Wellen von dem Zeitpunkt des Aussendens durch das zweite Emissionselement bis zum Empfangen durch das zweite Detektionselement benötigen, die von den zweiten elektromagnetischen Wellen zurückgelegte Strecke errechnet werden. Anhand dieser zurückgelegten Strecke kann der Abstand des zweiten Emissionselementes und des zweiten Detektionselementes zu dem zweiten Materialübergang errechnet werden. Dieser Abstand wird als zweiter Abstand bezeichnet. Die zweite Zeitdauer wird als zweite Laufzeit bezeichnet. Dabei behalten das zweite Emissionselement, das zweite Detektionselement und der zweite Materialübergang ihre relative räumliche Position zueinander während der Messung der zweiten Laufzeit der Wellen bei.

Die Richtungen, in die sich die reflektierten ersten elektromagnetischen Wellen und die reflektierten zweiten elektromagnetischen Wellen ausbreiten, sind zueinander parallel und können als Reflexionsrichtungen bezeichnet werden.

Die Emissionsrichtungen und die Reflexionsrichtungen sind zueinander antiparallel.

Bei dem ersten Materialübergang handelt es sich um einen Phasenübergang zweier Materialien, beispielsweise Luft zu einem Gummi oder zu einem Kautschuk. Bei dem Gummi oder dem Kautschuk handelt es sich um den Gummi oder den Kautschuk, aus dem der Reifen mit ausgebildet ist. Bei der Luft handelt es sich beispielsweise um Luft in einem Reifeninnenraum oder um Luft, die eine Außenfläche des Reifens umgibt. Bei der Außenfläche handelt es sich beispielsweise um eine von dem Reifen weg orientierte Oberfläche des Laufstreifens des Reifens.

Bei dem zweiten Materialübergang handelt es sich um einen Phasenübergang zweier Materialien, beispielsweise von dem Gummi oder von dem Kautschuk zu dem Festigkeitsträger. Bei dem Gummi oder dem Kautschuk handelt es sich um den Gummi oder den Kautschuk, aus dem der Reifen mit ausgebildet ist.

Anhand des ersten Abstandes und des zweiten Abstandes kann ein dritter Abstand errechnet werden.

Bei dem dritten Abstand handelt es sich insbesondere um die Differenz des ersten und zweiten Abstands. Bei dem dritten Abstand kann es sich beispielsweise um die Dicke eines Laufstreifens des Reifens handeln oder es kann sich um die Dicke einer Reifeninnenschicht des Reifens handeln. Für den Fall, wonach es sich beispielsweise um die Dicke einer Reifeninnenschicht handelt, liegt der erste Messpunkt an dem Phasenübergang von der Luft im Reifeninnenraum zu der Reifeninnenschicht. Die Reifeninnenschicht ist eine Gummi- oder Kautschukschicht. Der zweite Messpunkt liegt für diesen Fall am Materialübergang von der Reifeninnenschicht zu der Karkasse.

Mittels der erfindungsgemäßen Vorrichtung können Kautschukschichtdicken eines Reifens bestimmt werden, dies ist insbesondere für solche Verfahren wichtig, bei denen eine Kautschukschicht von einem Reifen abgetragen wird. Während der Abtragung der Kautschukschicht kann es zu einer Beschädigung eines unmittelbar neben der Kautschukschicht liegenden Komponente des Reifens kommen. Bei dieser Komponente handelt es sich beispielsweise um einen Festigkeitsträger.

Bei dem Reifen handelt es ich sich beispielsweise um einen PKW-Reifen, um einen LKW-Reifen oder um einen Zweirad-Reifen.

Mittels der erfindungsgemäßen Vorrichtung können insbesondere grundsätzlich Schichtdicken bei allen Elastomerprodukten oder Kautschukprodukten bestimmt werden, also insbesondere bei solchen, die eine Festigkeitsträger aufweisen, wobei der Festigkeitsträger von einer Elastomerschicht oder Kautschukschicht bedeckt ist.

Aus dem Stand der Technik sind Vorrichtungen zur Vermessung von Reifen bekannt. Die aus dem Stand der Technik bekannten Vorrichtungen könnten nicht präzise genug sein.

Aus der DE 10 2018 218 610 A1, der DE 10 2013 016 115 A1 und der DE 10 2017 218 902 A1 sind Verfahren und Vorrichtungen zur Bestimmung von Reifenparametern bekannt.

Der Erfindung liegt daher die Aufgabe zu Grunde eine Vorrichtung bereitzustellen mittels der präziser einen Reifen und die Komponenten eines Reifens vermessen werden können, als es bei aus dem Stand der Technik bekannten Vorrichtungen der Fall sein könnte.

Gelöst wird die Aufgabe dadurch, dass der erste Wellenlängenbereich von dem zweiten Wellenlängenbereich verschieden ist und der erste Wellenlängenbereich sich mit dem zweiten Wellenlängenbereich nicht überschneidet.

Wellenlängen von elektromagnetischen Wellen können äquivalent durch Frequenzen der elektromagnetischen Wellen beschrieben werden.

Gelöst wird die Aufgabe somit dadurch, dass der erste Wellenlängen- beziehungsweise Frequenzbereich von dem zweiten Wellenlängen- beziehungsweise Frequenzbereich verschieden ist und der erste Wellenlängen- beziehungsweise Frequenzbereich sich mit dem zweiten Wellenlängen- beziehungsweise Frequenzbereich nicht überschneidet.

Durch den erfindungsgemäßen Umstand, wonach der erste Wellenlängen- beziehungsweise Frequenzbereich von dem zweiten Wellenlängen- beziehungsweise Frequenzbereich verschieden ist und der erste Wellenlängen- beziehungsweise Frequenzbereich sich mit dem zweiten Wellenlängen- beziehungsweise Frequenzbereich nicht überschneidet, können unterschiedliche Komponenten und Bereiche des Reifens mit gleicher Genauigkeit vermessen werden. Hintergrund der Möglichkeit, unterschiedliche Komponente und Bereiche des Reifens mit gleicher Genauigkeit zu vermessen ist, dass eine Wechselwirkung des zu vermessenden Bereichs oder der zu vermessenden Komponente mit der Wellenlänge beziehungsweise der Frequenz der elektromagnetischen Welle besteht. So haben Wellen in einem Bereich vergleichsweise kleinerer Wellenlängen beziehungsweise höherer Frequenz eine höhere Energie als Wellen in einem Bereich vergleichsweise höherer Wellenlängen beziehungsweise niedriger Frequenz. Die Energie der Wellen kann mit der Wechselwirkung zwischen der Welle und dem Bereich oder der Komponente des Reifens in Zusammenhang stehen.

Darüber hinaus können Wellen in einem bestimmten Wellenlängen- beziehungsweise Frequenzbereich bestimmte Komponenten eines Reifens durchdringen und zur Vermessung des Abstands von Messkomponenten zu verdeckten Komponenten verwendet werden, während zugleich Wellen in einem anderen Bereich zur Vermessung des Abstands einer Messkomponente zu Oberflächen der bedeckenden Komponente verwendet werden können. Somit kann ein Abstand der Oberfläche einer verdeckenden Komponente zu einer verdeckten Komponente errechnet werden.

Somit wird eine verbesserte Vorrichtung bereitgestellt.

Die Erfindung betrifft weiter ein System zum Vermessen eines Reifens und von Komponenten des Reifens. Das System weist mindestens ein Haltemittel und mindestens ein Bewegungsmittel und mindestens eine erfindungsgemäße Vorrichtung auf. Die mindestens eine Vorrichtung wird dabei von dem mindestens einen Haltemittel gehalten. Das mindestens eine Bewegungsmittel ist eingerichtet, das mindestens eine Haltemittel zusammen mit der mindestens einen Vorrichtung relativ zu einem Reifen zu bewegen.

Weitere vorteilhafte Ausführungsformen der vorliegenden Erfindung sind Gegenstand der Unteransprüche.

Gemäß einer vorzugsweisen Ausgestaltungsform der vorliegenden Erfindung liegen die ersten elektromagnetischen Wellen in einem ersten Wellenlängenbereich von 300 nm bis 780 nm beziehungsweise in einem Frequenzbereich vom 384 THz bis 1000 THz und damit im Bereich des sichtbaren Lichtes inklusive der angrenzenden, nahen infraroten und ultravioletten Bereiche. Das erste Emissionselement ist somit insbesondere geeignet erste elektromagnetische Wellen auszusenden, die in einem ersten Wellenlängenbereich von 300 nm bis 780 nm beziehungsweise in einem Frequenzbereich vom 384 THz bis 1000 THz liegen.

Gemäß einer nächsten vorzugsweisen Ausgestaltungsform der vorliegenden Erfindung ist eine Abstandmessung über die Bestimmung der Laufzeit mit einer Auflösung kleiner oder gleich 0,1 mm.

Gemäß einer nächsten vorzugsweisen Ausgestaltungsform der vorliegenden Erfindung werden die zweiten elektromagnetischen Wellen mittels des zweiten Emissionselements gebündelt und liegen in einem zweiten Wellenlängenbereich von 1 mm bis 15 cm beziehungsweise in einem Frequenzbereich vom 2 GHz bis 300 GHz und damit im Bereich von Radarwellen. Das zweite Emissionselement ist somit insbesondere geeignet zweite elektromagnetische Wellen auszusenden, die gebündelt sind und in einem zweiten Wellenlängenbereich von 1 mm bis 15 cm beziehungsweise in einem Frequenzbereich vom 2 GHz bis 300 GHz liegen.

Gemäß einer nächsten vorzugsweisen Ausgestaltungsform der vorliegenden Erfindung liegt die Frequenz der zweiten elektromagnetischen Wellen des zweiten Emissionselementes in einem der folgenden Bereiche:
- 2,4 GHz bis 2,5 GHz
- 5,725 GHz bis 5,875 GHz
- 24,00 GHz bis 24,05 GHz
- 24,05 GHz bis 24,25 GHz
- 25,25 GHz bis 25,50 GHz
- 25,5 GHz bis 26,5 GHz
- 26,5 GHz bis 27,0 GHz
- 34,2 GHz bis 34,7 GHz
- 59,0 GHz bis 59,3 GHz
- 59,3 GHz bis 64,0 GHz
- 76,0 GHz bis 77,5 GHz
- 78,0 GHz bis 79,0 GHz
- 79,0 GHz bis 81,0 GHz
- 116,0 GHz bis 122,25 GHz
- 122,25 GHz bis 123,0 GHz
- 244 GHz bis 246 GHz.

Gemäß einer weiteren vorteilhaften Ausgestaltungsform der vorliegenden Erfindung weist das zweite Emissionselement insbesondere ein metallisches Rohr zur Bündelung der zweiten elektromagnetischen Wellen auf.

Gemäß der Erfindung handelt es sich bei den ersten elektromagnetischen Wellen um Laser-Wellen oder Laserstrahlen und bei den zweiten elektromagnetischen Wellen um Radar-Wellen oder Radarstahlen.

Die Aussendung und die Erfassung der ersten elektromagnetischen Wellen und der zweiten elektromagnetischen Wellen kann insbesondere so synchronisiert und eingerichtet werden, dass die über die Laufzeiten gemessenen Abstände aus den gleichen Positionen heraus gemessen werden.

Die Aussendung und die Erfassung der Laser- und Radarstrahlen kann somit insbesondere auch so synchronisiert und eingerichtet werden, dass die über die Laufzeiten gemessenen Abstände aus den gleichen Positionen heraus gemessen werden.

Gemäß der Erfindung handelt es sich bei dem ersten Emissionselement um einen Laser und bei dem ersten Detektionselement um ein Gerät, dass zum Aufnehmen oder zum Empfangen von Laser-Wellen oder Laserstrahlen geeignet ist.

Gemäß der Erfindung handelt es sich bei dem zweiten Emissionselement um ein Radar oder um ein Funkmeß-Gerät und bei dem zweiten Detektionselement um ein Gerät, dass zum Aufnehmen oder zum Empfangen von Radar-Wellen oder Radarstrahlen geeignet ist. Weitere Vorteile, Merkmale und Einzelheiten, auf die die Erfindung in ihrem Umfang nicht beschränkt ist, werden nun anhand der Zeichnungen näher beschrieben.

Es zeigt:
Fig. 1: eine schematische Darstellung einer erfindungsgemäßen Vorrichtung gemäß einer Ausführungsform;
Fig. 2: eine schematische Darstellung einer erfindungsgemäßen Vorrichtung und eines Bereichs eines Reifens gemäß einer Ausführungsform;
Fig. 3: eine schematische Darstellung eines erfindungsgemäßen Systems.

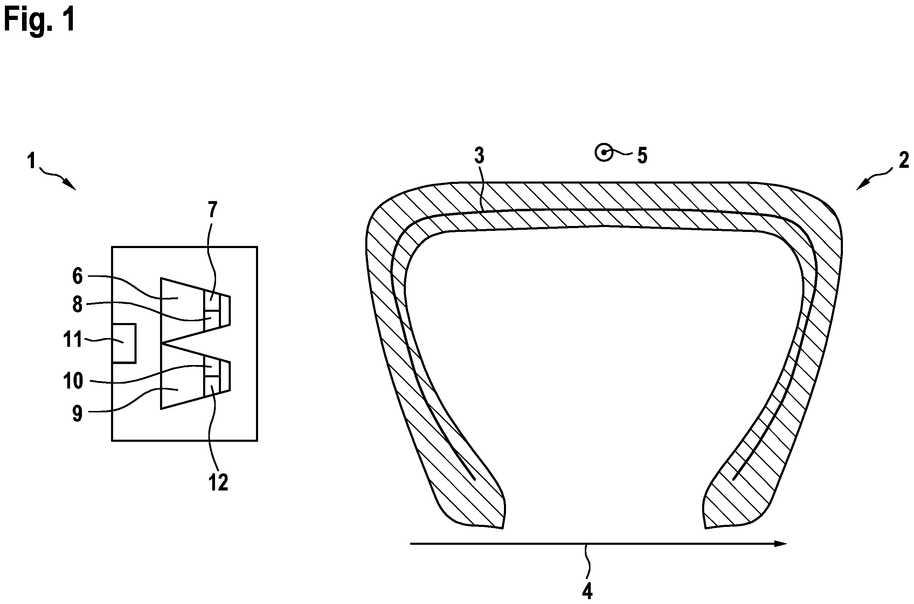

In der Figur 1 ist eine erfindungsgemäße Vorrichtung 1 schematisch dargestellt. Die Vorrichtung 1 ist zum Vermessen eines Reifens 2 und von Komponenten 3 des Reifens 2 vorgesehen. Der Reifen 2 ist in Radialschnittansicht dargestellt und um eine Rotationsachse 4 in eine Umlaufrichtung 5 rotierbar. Bei der Komponente 3 handelt es sich gemäß der Darstellung in der Figur 1 um eine Karkasse des Reifens 2.

Die Vorrichtung 1 weist eine erste Messkomponente 6 und eine zweite Messkomponente 9 auf, wobei die erste Messkomponente 6 und die zweite Messkomponente 9 jeweils zur Durchführung eines Laufzeitverfahrens vorgesehen sind.

Die Vorrichtung 1 weist weiter eine Auswertekomponente 11 auf, wobei die Auswertekomponente 11 zur Auswertung von mittels der ersten Messkomponente 6 und mittels der zweiten Messkomponente 9 gemessener Messgrößen vorgesehen ist.

Die erste Messkomponente 6 weist ein erstes Emissionselement 7 und eine erstes Detektionselement 8 auf.

Die zweite Messkomponente 9 weist ein zweites Emissionselement 10 und ein zweites Detektionselement 12 auf.

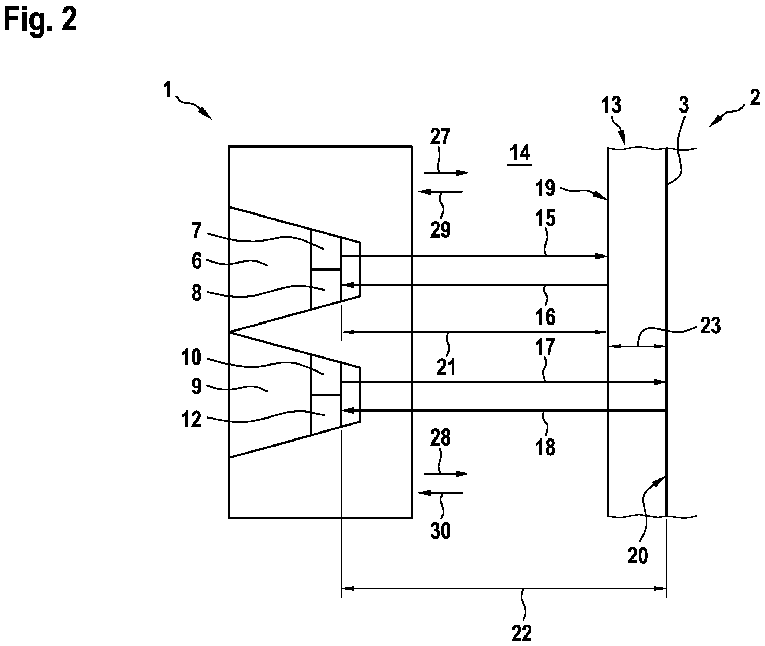

In der Figur 2 ist die Vorrichtung 1 und ein Bereich des Reifens 2 schematisch dargestellt. In dem Bereich des Reifens 2 ist der Festigkeitsträger 3 und eine den Festigkeitsträger 3 bedeckende Kautschukschicht 13 dargestellt. Im dargestellten Bereich des Reifens 2 ist die Kautschukschicht 13 gleichmäßig dick.

Das erste Emissionselement 7 ist zur Aussendung erster elektromagnetischer Wellen 15 in eine erste Emissionsrichtung 27 vorgesehen und das erste Detektionselement 8 ist zum Erfassen der reflektierten ersten elektromagnetischen Wellen 16 nach einer Reflektion der ersten elektromagnetischen Wellen 15 vorgesehen.

Die Reflektion der ersten elektromagnetischen Wellen 15 erfolgt an einem ersten Materialübergang 19. Der erste Materialübergang 19 wird durch den Phasenübergang zwischen einer Luft 14 und der Kautschukschicht 13 gebildet. Bei der Luft 14 handelt es sich um die Luft zwischen dem Reifen 2 und der Vorrichtung 1. Anhand der Laufzeit der reflektierten ersten elektromagnetischen Wellen 16 und der ersten elektromagnetischen Wellen 15 kann ein erster Abstand 21 errechnet werden.

Das zweite Emissionselement 10 zur Aussendung zweiter elektromagnetischer Wellen 17 in eine zweite Emissionsrichtung 28 vorgesehen und das zweite Detektionselement 12 ist zum Erfassen der reflektierten zweiten elektromagnetischen Wellen 18 nach einer Reflektion der zweiten elektromagnetischen Wellen 17 vorgesehen.

Die Reflektion der zweiten elektromagnetischen Wellen 17 erfolgt an einem zweiten Materialübergang 20. Der zweite Materialübergang 20 wird durch den Phasenübergang zwischen der Komponente 3 und der Kautschukschicht 13 gebildet.

Anhand der Laufzeit der reflektierten zweiten elektromagnetischen Wellen 18 und der zweiten elektromagnetischen Wellen 17 kann ein zweiter Abstand 22 errechnet werden. Anhand des erstens Abstands 21 und des zweiten Abstands 22 kann ein dritter Abstand 23 errechnet werden. Der dritte Abstand 23 entspricht der Dicke der Kautschukschicht 13.

Die erste Emissionsrichtung 27 und die zweite Emissionsrichtung 28 sind zueinander parallel, wobei die ersten elektromagnetischen Wellen 15 in einem ersten Wellenlängenbereich liegen und die zweiten elektromagnetischen Wellen 17 in einem zweiten Wellenlängenbereich liegen, wobei der erste Wellenlängenbereich von dem zweiten Wellenlängenbereich verschieden ist und der erste Wellenlängenbereich sich mit dem zweiten Wellenlängenbereich nicht überschneidet.

Die Richtungen 29, 30, in die sich die reflektierten ersten elektromagnetischen Wellen 16 beziehungsweise die reflektierten zweiten elektromagnetischen Wellen 18 ausbreiten, sind zueinander parallel und können als Reflexionsrichtungen 29, 30 bezeichnet werden.

Die Emissionsrichtungen 27, 28 sind zu den Reflexionsrichtungen 29, 30 antiparallel.

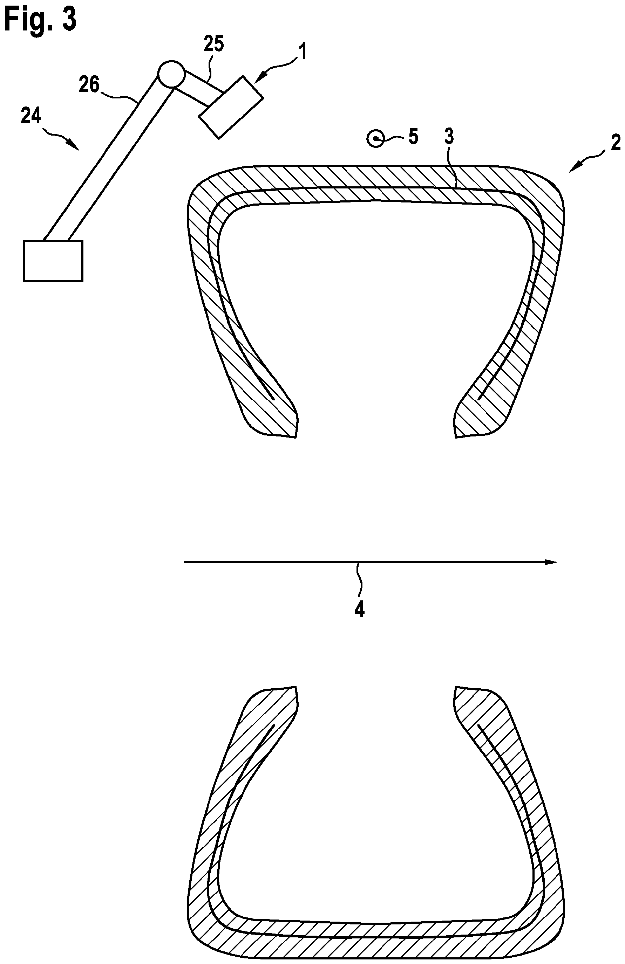

Gemäß der Erfindung handelt es sich bei den ersten elektromagnetischen Wellen 15 um Laser-Wellen und bei den zweiten elektromagnetischen Wellen 17 um Radar-Wellen. In der Figur 3 ist ein erfindungsgemäßes System 24 schematisch dargestellt. Das System 24 ist zum Vermessen eines Reifens 2 und von Komponenten 3 des Reifens 2 vorgesehen. Das System 24 weist mindestens ein Haltemittel 25 und mindestens ein Bewegungsmittel 26 und mindestens eine erfindungsgemäße Vorrichtung 1 auf. Die mindestens eine Vorrichtung 1 wird von dem mindestens einen Haltemittel 25 gehalten und das mindestens eine Bewegungsmittel 26 ist eingerichtet, das mindestens eine Haltemittel 25 zusammen mit der mindestens einen Vorrichtung 1 relativ zu einem Reifen 2 zu bewegen.

### Bezugszeichenliste

### (Teil der Beschreibung)

- 1: Vorrichtung
- 2: Reifen
- 3: Komponente
- 4: Rotationsache
- 5: Umlaufrichtung
- 6: Erste Messkomponente
- 7: Erstes Emissionselement
- 8: Erstes Detektionselement
- 9: Zweite Messkomponente
- 10: Zweites Emissionselement
- 11: Auswertekomponente
- 12: Zweites Detektionselement
- 13: Kautschukschicht
- 14: Luft
- 15: Erste elektromagnetische Wellen
- 16: Reflektierte erste elektromagnetische Wellen
- 17: Zweite elektromagnetische Wellen
- 18: Reflektierte zweite elektromagnetische Wellen
- 19: Erster Materialübergang
- 20: Zweiter Materialübergang
- 21: Erster Abstand
- 22: Zweiter Abstand
- 23: Dritter Abstand
- 24: System
- 25: Haltemittel
- 26: Bewegungsmittel
- 27: Erste Emissionsrichtung der ersten elektromagnetischen Wellen
- 28: Zweite Emissionsrichtung der zweiten elektromagnetischen Wellen
- 29: Erste Reflexionsrichtung der reflektierten ersten elektromagnetischen Wellen
- 30: Zweite Reflexionsrichtung der reflektierten zweiten elektromagnetischen Wellen

## Patentansprüche

1. Vorrichtung (1) zum Vermessen eines Reifens (2) und von Komponenten (3, 13) des Reifens (2), aufweisend eine erste Messkomponente (6) und eine zweite Messkomponente (9), wobei die erste Messkomponente (6) und die zweite Messkomponente (9) jeweils zur Durchführung eines Laufzeitverfahrens vorgesehen sind, und aufweisend eine Auswertekomponente (11), wobei die Auswertekomponente (11) zur Auswertung von mittels der ersten Messkomponente (6) und mittels der zweiten Messkomponente (9) gemessener Messgrößen vorgesehen ist, wobei die erste Messkomponente (6) ein erstes Emissionselement (7) und ein erstes Detektionselement (8) aufweist und wobei die zweite Messkomponente (9) ein zweites Emissionselement (10) und ein zweites Detektionselement (12) aufweist, wobei das erste Emissionselement (7) zur Aussendung erster elektromagnetischer Wellen (15) in eine erste Emissionsrichtung (27) vorgesehen ist und das erste Detektionselement (8) zum Erfassen der ersten elektromagnetischen Wellen (16) nach einer Reflektion der ersten elektromagnetischen Wellen (15) vorgesehen ist und wobei das zweite Emissionselement (10) zur Aussendung zweiter elektromagnetischer Wellen (17) in eine zweite Emissionsrichtung (28) vorgesehen ist und das zweite Detektionselement (12) zum Erfassen der zweiten elektromagnetischen Wellen (18) nach einer Reflektion der zweiten elektromagnetischen Wellen (17) vorgesehen ist, wobei die erste Emissionsrichtung (27) und die zweite Emissionsrichtung (28) zueinander parallel sind, wobei die ersten elektromagnetischen Wellen (15) in einem ersten Wellenlängenbereich liegen und die zweiten elektromagnetischen Wellen (17) in einem zweiten Wellenlängenbereich liegen, **wobei** der erste Wellenlängenbereich von dem zweiten Wellenlängenbereich verschieden ist und der erste Wellenlängenbereich sich mit dem zweiten Wellenlängenbereich nicht überschneidet, **dadurch gekennzeichnet, dass** es sich bei den ersten elektromagnetischen Wellen (15) um Laser-Wellen handelt und es sich bei den zweiten elektromagnetischen Wellen (17) um Radar-Wellen handelt.

2. Vorrichtung (1) nach Anspruch 1, **dadurch gekennzeichnet, dass** die ersten elektromagnetischen Wellen (15) in einem ersten Wellenlängenbereich von 300 nm bis 780 nm beziehungsweise in einem Frequenzbereich vom 384 THz bis 1000 THz liegen.

3. Vorrichtung (1) nach einem der vorhergehenden Ansprüche, **dadurch gekennzeichnet, dass** die zweiten elektromagnetischen Wellen (17) mittels des zweiten Emissionselements (10) gebündelt werden und in einem zweiten Wellenlängenbereich von 1 mm bis 15 cm beziehungsweise in einem Frequenzbereich vom 2 GHz bis 300 GHz liegen.

4. System (24) zum Vermessen eines Reifens (2) und von Komponenten (3, 13) des Reifens (2), aufweisend mindestens ein Haltemittel (25) und mindestens ein Bewegungsmittel (26), **dadurch gekennzeichnet, dass** das System (24) mindestens eine Vorrichtung (1) nach einem der vorhergehenden Ansprüche aufweist, wobei die mindestens eine Vorrichtung (1) von dem mindestens einen Haltemittel (25) gehalten wird und das mindestens eine Bewegungsmittel (26) eingerichtet ist, das mindestens eine Haltemittel (25) zusammen mit der mindestens einen Vorrichtung (1) relativ zu einem Reifen (2) zu bewegen.

## Claims

1. Device (1) for measuring a tyre (2) and components (3, 13) of the tyre (2), having a first measuring component (6) and a second measuring component (9), wherein the first measuring component (6) and the second measuring component (9) are respectively intended for carrying out a time-of-flight method, and having an evaluation component (11), wherein the evaluation component (11) is intended for evaluating measuring variables measured by means of the first measuring component (6) and by means of the second measuring component (9), wherein the first measuring component (6) has a first emission element (7) and a first detection element (8) and wherein the second measuring component (9) has a second emission element (10) and a second detection element (12), wherein the first emission element (7) is intended for emitting first electromagnetic waves (15) in a first emitting direction (27) and the first detection element (8) is intended for detecting the first electromagnetic waves (16) after reflection of the first electromagnetic waves (15) and wherein the second emission element (10) is intended for emitting second electromagnetic waves (17) in a second emitting direction (28) and the second detection element (12) is intended for detecting the second electromagnetic waves (18) after reflection of the second electromagnetic waves (17), wherein the first emitting direction (27) and the second emitting direction (28) are parallel to one another, wherein the first electromagnetic waves (15) lie in a first wavelength range and the second electromagnetic waves (17) lie in a second wavelength range, **wherein** the first wavelength range is different from the second wavelength range and the first wavelength range does not overlap with the second wavelength range, **characterized in that** the first electromagnetic waves (15) are laser waves and the second electromagnetic waves (17) are radar waves.

2. Device (1) according to Claim 1, **characterized in that** the first electromagnetic waves (15) lie in a first wavelength range of from 300 nm to 780 nm or in a frequency range of from 384 THz to 1000 THz.

3. Device (1) according to either of the preceding claims, **characterized in that** the second electromagnetic waves (17) are concentrated by means of the second emission element (10) and lie in a second wavelength range of from 1 mm to 15 cm or in a frequency range of from 2 GHz to 300 GHz.

4. System (24) for measuring a tyre (2) and components (3, 13) of the tyre (2), having at least one holding means (25) and at least one moving means (26), **characterized in that** the system (24) has at least one device (1) according to one of the preceding claims, wherein the at least one device (1) is held by the at least one holding means (25) and the at least one moving means (26) is designed to move the at least one holding means (25) together with the at least one device (1) relative to a tyre (2).

## Revendications

1. Dispositif (1) pour mesurer un pneumatique (2) et des composants (3, 13) du pneumatique (2), présentant un premier composant de mesure (6) et un deuxième composant de mesure (9), le premier composant de mesure (6) et le deuxième composant de mesure (9) étant chacun prévus pour la mise en oeuvre d'un procédé d'exécution, et présentant un composant d'évaluation (11), le composant d'évaluation (11) étant prévu pour évaluer des grandeurs mesurées au moyen du premier composant de mesure (6) et au moyen du deuxième composant de mesure (9), le premier composant de mesure (6) présentant un premier élément d'émission (7) et un premier élément de détection (8), et le deuxième composant de mesure (9) présentant un deuxième élément d'émission (10) et un deuxième élément de détection (12), le premier élément d'émission (7) étant prévu pour émettre des premières ondes électromagnétiques (15) dans une première direction d'émission (27) et le premier élément de détection (8) étant prévu pour détecter les premières ondes électromagnétiques (16) après une réflexion des premières ondes électromagnétiques (15), et le deuxième élément d'émission (10) étant prévu pour émettre des deuxièmes ondes électromagnétiques (17) dans une deuxième direction d'émission (28) et le deuxième élément de détection (12) étant prévu pour détecter les deuxièmes ondes électromagnétiques (18) après une réflexion des deuxièmes ondes électromagnétiques (17), la première direction d'émission (27) et la deuxième direction d'émission (28) étant parallèles entre elles, les premières ondes électromagnétiques (15) se situant dans une première gamme de longueurs d'onde et les deuxièmes ondes électromagnétiques (17) se situant dans une deuxième gamme de longueurs d'onde, la première gamme de longueurs d'onde étant différente de la deuxième gamme de longueurs d'onde et la première gamme de longueurs d'onde ne chevauchant pas la deuxième gamme de longueurs d'onde, **caractérisé en ce que** les premières ondes électromagnétiques (15) sont des ondes laser et **en ce que** les deuxièmes ondes électromagnétiques (17) sont des ondes radar.

2. Dispositif (1) selon la revendication 1, **caractérisé en ce que** les premières ondes électromagnétiques (15) se situent dans une première gamme de longueurs d'onde allant de 300 nm à 780 nm ou dans une gamme de fréquences allant de 384 THz à 1000 THz.

3. Dispositif (1) selon l'une des revendications précédentes, **caractérisé en ce que** les deuxièmes ondes électromagnétiques (17) sont concentrées au moyen du deuxième élément d'émission (10) et se situent dans une deuxième gamme de longueurs d'onde allant de 1 mm à 15 cm ou dans une gamme de fréquences allant de 2 GHz à 300 GHz.

4. Système (24) pour mesurer un pneumatique (2) et des composants (3, 13) du pneumatique (2), comprenant au moins un moyen de maintien (25) et au moins un moyen de déplacement (26), **caractérisé en ce que** le système (24) comprend au moins un dispositif (1) selon l'une des revendications précédentes, ledit au moins un dispositif (1) étant maintenu par ledit au moins un moyen de maintien (25) et ledit au moins un moyen de déplacement (26) étant conçu pour déplacer ledit au moins un moyen de maintien (25) conjointement avec ledit au moins un dispositif (1) par rapport à un pneumatique (2).
